# EUROPÄISCHE PATENTSCHRIFT

(11) **EP 0 573 799 B1**
(45) Veröffentlichungstag und Bekanntmachung des Hinweises auf die Patenterteilung: **13.08.1997**
(21) Anmeldenummer: 93107640.0
(22) Anmeldetag: 11.05.1993
(51) Int. Cl.: F16D 41/07, F16C 33/46

(54) **Rollen- oder Klemmkörper-Freilauf mit seitlicher zusätzlicher Wälzlagerung**
Roller or sprac freewheel with additional rolling bearing alongside
Roue libre à rouleau ou béquilles, avec palier à roulement additionnel disposé latéralement

(30) Priorität: 11.06.1992 DE 4219154
(43) Veröffentlichungstag der Anmeldung: 15.12.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Premiski, Vladimir, W-5358 Bad Muenstereifel-Willerscheidt (DE); Wehren, Wilhelm, W-5014 Kerpen Blatzheim (DE); Silk, Mark, W-5000 Koeln 71 (DE); Biedermann, Sieghart, W-5024 Pulheim 1 (DE)
(74) Vertreter: Messulam, Alec Moses

(56) Entgegenhaltungen:
- DE-A- 2 739 367
- DE-A- 2 758 841
- US-A- 5 129 495

## Beschreibung

Die Erfindung bezieht sich auf einen Rollen- oder Klemmkörper-Freilauf mit seitlicher, zusätzlicher Wälzlagerung der im Oberbegriff des Patentanspruches 1 erläuterten Art.

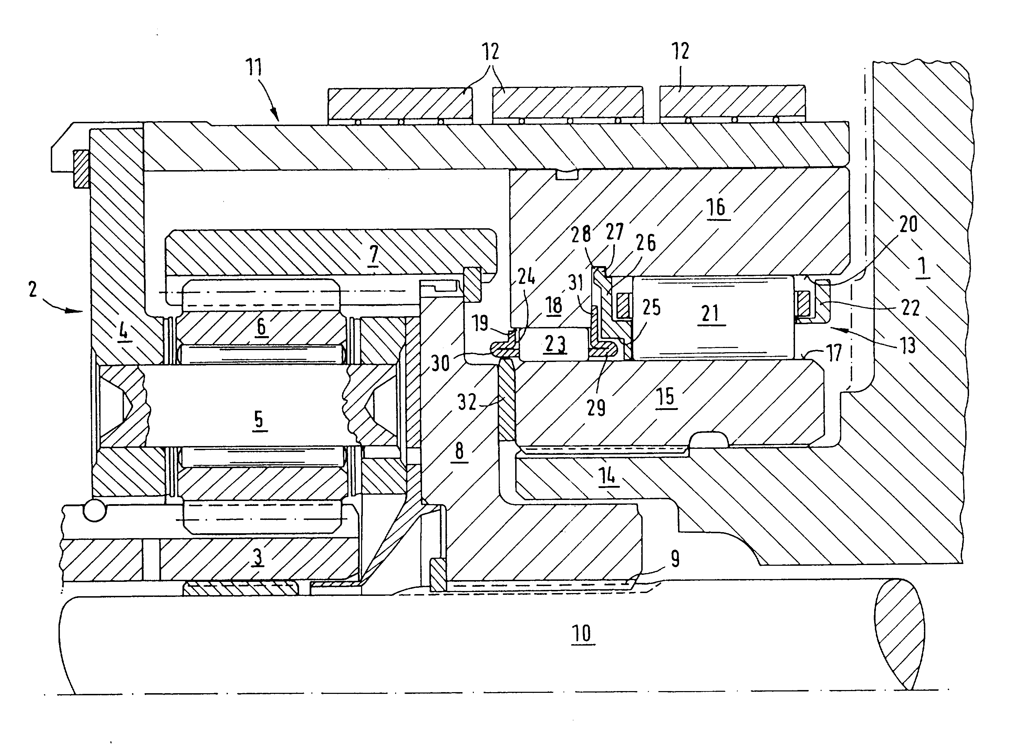

Aus der DE-PS 36 12 046 ist ein Rollen- oder Klemmkörper-Freilauf, insbesondere für Automatik-Getriebe für Kraftfahrzeuge, bekannt, bei dem die von einem Klemmkörperkäfig geführten Klemmkörper zwischen einem Innenring und einem Außenring angeordnet sind, wobei benachbart dem unmittelbaren Bereich des Klemmkörper-Freilaufs seitliche, zusätzliche Gleitlagerringe angeordnet sind, um eine zusätzliche Abstützung des Außenringes am Innenring bereitzustellen. Der Klemmkörperkäfig besteht hierbei aus Kunststoff und ist über radiale Vorsprünge in einer Nut im Innendurchmesser des Außenringes axial festgelegt (siehe Fig. 4). Die seitlichen Gleitlagerringe sind über axial vorspringende Randbereiche mit entsprechenden Randbereichen des Klemmkörperkäfigs verrastet. Benachbarte Bauteile des Automatik-Getriebes, wie z.B. ein benachbart liegender Planetenradträger, sind axial über herkömmliche Anlaufscheiben oder Nadellager abgestützt.

Aus der den Ausgangspunkt der Erfindung bildenden DE-PS 27 58 841 ist ein Rollen- oder Klemmkörper-Freilauf mit seitlicher, zusätzlicher Wälzlagerung bekannt, mit zwischen einem Innenring und einem Außenring angeordneten, in gesonderten Käfigen geführten Klemmkörpern und Wälzkörpern, wobei die Ringe mit an die Wälzkörper angepaßten Laufbahnen versehen sind und die Breite der Ringe die Länge der Klemmkörper erheblich überragt, wobei die gesonderten Käfige aneinanderliegen und zumindest einer der Käfige durch in eine Ringnut eines der Ringe eingesprengten Sicherungsgliedes axial festgelegt ist.

Für diesen bekannten Rollen- oder Klemmkörper-Freilauf mit seitlicher, zusätzlicher Wälzlagerung sind verschiedene Ausführungsformen einer Kombination eines Klemmkörper-Freilaufes mit einem Nadel- oder Rollenlager oder mit einem Rillenkugellager aufgezeigt, wobei die eine Ausführungsform keine und die andere Ausführungsform Axialkräfte aufnehmen kann.

Aus der EP-PS 0 291 550 ist ein Klemmkörper-Freilauf mit Doppelkäfig bekannt, bei dem zumindest ein Teil des Klemmkörperkäfigs, der Außenkäfigring aus Kunststoff besteht und über nach außen ragende Radialvorsprünge mit einer Nut im Innenumfang des Außenringes und über seitlich ausragende Axialvorsprünge mit seitlichen zusätzlichen Gleitlagerringen verrastet ist.

Aus der US-A-5 129 495 ist ein Klemmkörper-Freilauf mit benachbarter Wälzlageranordnung bekannt, wobei sowohl bei der Freilaufanordnung als auch der Wälzlageranordnung die Lagerkäfige aus Kunststoff bestehen und mit nach außen ragenden Radialvorsprüngen mit jeweils einer Nut im Innenumfang ihres jeweiligen Außenringes zusammenwirken. Die jeweiligen Außenringe sind hierbei getrennte Bauteile und werden durch Verrasten der beiden Kunststoffkäfige axial miteinander fixiert.

Die Aufgabe der Erfindung ist es, einen Rollen- oder Klemmkörper-Freilauf mit seitlicher, zusätzlicher Wälzlagerung der im Oberbegriff des Patentanspruches 1 erläuterten Art derart zu verbessern, daß eine einwandfreie axiale und radiale Positionierung der beiden Baugruppen des Rollen- oder Klemmkörper-Freilaufs mit Wälzlagerung erzielt wird, wobei den einzelnen Baugruppen jedoch die aufgrund unterschiedlicher Umlaufgeschwindigkeiten erforderlichen Freiheitsgrade gesichert werden.

Gemäß der Erfindung wird diese Aufgabe gelöst, indem ein Rollen- oder Klemmkörper-Freilauf mit seitlicher, zusätzlicher Wälzlagerung, gemäß dem Oberbegriff des Patentanspruches 1 die im Kennzeichenteil des Patentanspruches 1 aufgezeigten Merkmale aufweist.

Dadurch, daß am Freilaufkäfig, benachbart der Wälzlagerung ein sich radial erstreckender Flanschteil ausgebildet ist, der über Radialvorsprünge in eine Ringnut im Außenring eingesprengt ist, wobei der Flanschteil mit seinen Radialvorsprüngen das Sicherheitsglied bildet, und am Wälzlagerkäfig benachbart dem Freilauf ein radialer Führungsflansch ausgebildet ist, der zwischen der einen Seite der Ringnut und dem benachbarten Flanschteil aufgenommen und axial fixiert ist, wird eine einfache und sichere axiale Festlegung der Freilauf-Wälzlager-Baueinheit erzielt.

Dadurch, daß am Außenring die eine Schulter der Ringnut in einen Ringabsatz übergeht und der radiale Führungsflansch des Wälzlagerkäfigs zwischen dem Ringabsatz und dem benachbarten Flanschteil aufgenommen und axial fixiert ist, wird bei einer Bauform mit mit voneinander stärker abweichender radialer Erstreckung der Wälzkörper von den Klemmkörpern die axiale Fixierung erzielt.

Dadurch, daß am Freilaufkäfig, benachbart der Wälzlagerung eine axial vorspringende Schulter ausgebildet ist und am Wälzlagerkäfig zumindest ein axial nach einer Seite vorspringender Ringwulst ausgebildet ist, der in den radialen Führungsflansch übergeht und die axial vorspringende Schulter des Freilaufkäfigs den Wälzlagerkäfig über dessen Ringwulst radial führt, wird zusätzlich zur axialen Festlegung noch eine radiale Zentrierung erreicht.

Dadurch, daß am Wälzlagerkäfig ein zweiter axial nach der anderen Seite vorspringender Ringwulst ausgebildet ist, wird eine Radialführung für ein benachbartes Axial-Wälz- oder Gleitlager gebildet.

Die Erfindung wird anhand eines in der Zeichnung gezeigten Ausführungsbeispieles näher erläutert. Es zeigt:
Die Figur einen vertikalen Teilschnitt durch einen Bereich eines Automatik-Getriebes für Kraftfahrzeuge, in dem eine benachbart einem Planetenradsatz angeordnete Bremstrommel zum Festlegen des Planetenradträgers auf einem Vorsprung des Getriebegehäuses über einen Rollen- oder Klemmkörper-Freilauf mit seitlicher, zusätzlicher Wälzlagerung gemäß der Erfindung abgestützt ist.

In der Figur ist in einem Getriebegehäuse 1 ein Planetenradsatz 2 angeordnet, der einen Teil eines sogenannten Simpson-Planetenradsatzes bildet, der ein mit einem anderen Planetenradsatz (nicht gezeigt) gemeinsames Sonnenrad 3 aufweist. Auf einem Planetenradträger 4 sind über Planetenradbolzen 5 Planetenräder 6 drehbar gelagert, die in Eingriff mit einem Ringrad 7 stehen, das über ein Nabenbauteil 8 über eine Keilverzahnung 9 mit der Abtriebswelle 10 des Automatik-Getriebes treibend verbunden ist. Der Planetenradträger 4 ist hierbei in bekannter Weise mit einer Bremstrommel 11 verbunden, die über ein zugehöriges Bremsband 12 ein Festlegen des Planetenradträgers 4 in beiden Drehrichtungen ermöglicht.

Die Bremstrommel 11 ist jedoch auch über eine Rollen- oder Klemmkörper-Freilauf-Anordnung 13 an einem Vorsprung 14 des Getriebegehäuses 1 nur in einer Drehrichtung abstützbar.

Die Rollen- oder Klemmkörper-Freilauf-Anordnung 13 besteht aus einem Innenring 15, der am Vorsprung 14 des Gehäuses 1 festgelegt ist und einem Außenring, der von einem verdickten Teil der Bremstrommel 11 gebildet sein kann. Alternativ kann die Bremstrommel wie hier gezeigt, auch zweiteilig, aus einem zylindrischen Bremstrommel-Mantel 11 und einem mit diesem durch eine Preß- oder Schrumpfverbindung fest verbundenen Außenring 16 gebildet werden.

Der Innenring 15 bildet mit seinem Außenumfang eine innere Außenlauffläche 17 und der Außenring 16 bildet an einem Ringabsatz 18 eine erste Innenlauffläche 19 und in seinem übrigen Bereich eine zweite Innenlauffläche 20.

Zwischen der Außenlauffläche 17 und der Innenlauffläche 20 sind Klemmkörper 21 angeordnet, die in einem Freilaufkäfig 22 geführt werden. Zwischen der Außenlauffläche 17 und der Innenlauffläche 19 sind Wälzkörper 23 angeordnet, die in einem Wälzkörperkäfig 24 geführt werden.

Der Freilaufkäfig 22 der Klemmkörperanordnung 21/22 ist an seiner der Wälzlageranordnung 23/24 benachbarten Seite mit einer axial vorspringenden Schulter 25 und einem sich radial erstreckenden Flanschteil 26 mit mehreren Radialvorsprüngen 27 versehen, mit der er in einer Ringnut 28 im Außenring 16 axial festgelegt ist.

Die Wälzlageranordnung 23/24 weist an ihrem Wälzlagerkäfig 23 seitlich axial auskragende Ringwülste oder -schultern 29 und 30 auf, von denen der der Klemmkörperanordnung benachbarte Ringwulst 29 in einen sich radial erstreckenden Führungsflansch 31 übergeht.

Zwischen dem feststehenden Innenring 15 und dem benachbarten Nabenbauteil 8 des Ringrades 7 kann ein Axiallager 32 in der Form eines Axial-Nadellagers oder einer Axial-Anlaufscheibe angeordnet werden.

Der am Wälzlagerkäfig 24 ausgebildete radiale Führungsflansch 31 wird zwischen dem Ringabsatz 18 am Außenring 16 der Bremstrommel 11 und dem benachbarten Flanschteil 26 am Freilaufkäfig 22 mit dem erforderlichen Axialspiel festgelegt. Der Wälzlagerkäfig 24 wird hierbei über seinen axial vorspringenden Ringwulst 29 an der axial vorspringenden Schulter 25 am Freilaufkäfig 22 radial geführt. Mit seinem an der anderen Seite axial vorspringenden Ringwulst 30 kann der Wälzlagerkäfig 24 das benachbarte Axiallager 32 radial zentrieren. Das Lager kann jedoch selbstverständlich auch in einer anderen bekannten Art und Weise festgelegt und zentriert werden.

Durch die erfindungsgemäße axiale Festlegung des Wälzlagerkäfigs 24 über den radialen Führungsflansch 31 zwischen dem Ringabsatz 18 und dem Flanschteil 26 des Freilaufkäfigs 22 wird eine vormontierbare Baueinheit, bestehend aus der Bremstrommel 11 und der Klemmkörper- und der Wälzlageranordnung 21/22 und 23/24 geschaffen, wobei der erforderliche Freiheitsgrad für die unterschiedlichen Drehzahlen der beiden benachbarten Käfiganordnungen gewährleistet wird.

## Patentansprüche

1. Rollen- oder Klemmkörper-Freilauf mit seitlicher, zusätzlicher Wälzlagerung, mit zwischen einem Innenring (15) und einem Außenring (16) angeordneten, in gesonderten Käfigen (22 und 24) geführten Klemmkörpern (21) bzw. Wälzkörpern (23), wobei die Ringe mit an die Klemmkörper bzw. die Wälzkörper angepaßten Laufbahnen (17, 19 und 20) versehen sind und die Breite der Ringe die Länge der Klemmkörper überragt, wobei die gesonderten Käfige (22 und 24) aneinanderliegen und zumindest einer der Käfige (22) über ein Sicherungsglied (27) in eine Ringnut (28) in einem der Ringe eingesprengt und axial festgelegt ist,
**dadurch gekennzeichnet**, daß
- am Freilaufkäfig (22), benachbart der Wälzlagerung, ein sich radial erstreckender Flanschteil (26) ausgebildet ist, der über Radialvorsprünge (27) in eine Ringnut (28) im Außenring (16) eingesprengt ist wobei der Flanschteil mit seinen Radialvorsprüngen das Sicherheitsglied bildet und
- am Wälzlagerkäfig (24) benachbart dem Freilauf ein radialer Führungsflansch (31) ausgebildet ist, der zwischen der einen Seite der Ringnut (28) und dem benachbarten Flanschteil (26) aufgenommen und so axial fixiert ist.

2. Rollen- oder Klemmkörper-Freilauf mit seitlicher, zusätzlicher Wälzlagerung nach Anspruch 1,
**dadurch gekennzeichnet**, daß
- am Außenring (16) die eine Seite der Ringnut (28) in einen Ringabsatz (18) übergeht und
- der radiale Führungsflansch (31) des Wälzlagerkäfigs (24) zwischen dem Ringabsatz (18) und dem benachbarten Flanschteil (26) aufgenommen und axial fixiert ist.

3. Rollen- oder Klemmkörper-Freilauf mit seitlicher, zusätzlicher Wälzlagerung nach Anspruch 1,
**dadurch gekennzeichnet**, daß
- am Freilaufkäfig (22), benachbart der Wälzlagerung eine axial vorspringende Schulter (25) ausgebildet ist,
- am Wälzlagerkäfig (24) zumindest ein, benachbart dem Freilaufkäfig (22) axial vorspringender Ringwulst (29) ausgebildet ist, der in den radialen Führungsflansch (31) übergeht und
- die axial vorspringende Schulter (25) des Freilaufkäfigs (22) den Wälzlagerkäfig (24) über dessen Ringwulst (29) radial zentriert.

4. Rollen- oder Klemmkörper-Freilauf mit seitlicher, zusätzlicher Wälzlagerung nach Anspruch 3,
**dadurch gekennzeichnet**, daß
- am Wälzlagerkäfig (24) ein zweiter nach der anderen Seite axial vorspringender Ringwulst (30) ausgebildet ist, der eine Radialzentrierung für ein benachbartes Axial-Wälz- oder Gleitlager (32) bildet.

## Claims

1. A roller- or clamping-element overrunning clutch with a lateral additional rolling bearing, comprising clamping elements (21) and rolling elements (23) carried in respective separate cages (22 and 24) between an inner ring (15) and an outer ring (16), wherein the rings are provided with tracks (17, 19 and 20) adapted to the clamping and rolling elements respectively and the breadth of the rings exceeds the length of the clamping elements, and wherein the separate cages (22 and 24) adjoin one another and at least one of the cages (22) is snap fitted and axially located by a fastening member (27) in an annular groove (28) in one of the rings,
characterised in that
- on the free-wheel cage (22), adjacent the rolling bearing, a radially extending flange part (26) is formed that is snap-fitted into an annular groove (28) in the outer ring (16) by means of radial projections (27), the flange part forming the fastening member with its radial projections, and
- on the rolling bearing cage (24) a radial guide flange (31) is formed adjacent the free-wheel that is received between one side of the annular groove (28) and the adjacent flange part (26) and is thus axially fixed.

2. A roller- or clamping-element overrunning clutch with a lateral additional rolling bearing according to claim 1,
characterised in that
- on the outer ring (16) one side of the annular groove (28) merges into an annular shoulder (18) and
- the radial guide flange (31) of the rolling bearing cage (24) is received and axially fixed between the annular shoulder (18) and the adjacent flange part (26).

3. A roller- or clamping-element overrunning clutch with a lateral additional rolling bearing according to claim 1,
characterised in that
- on the free-wheel cage (22) an axially projecting shoulder (25) is formed adjacent the rolling bearing,
- on the rolling bearing cage (24) at least one annular bead (29) is formed that projects axially adjacent the free-wheel cage (22) and merges into the radial guide flange (31), and
- the axially projecting shoulder (25) of the free-wheel cage (22) radially centres the rolling bearing cage (24) by means of its annular bead (29).

4. A roller- or clamping-element overrunning clutch with a lateral additional rolling bearing according to claim 3,
characterised in that
- on the rolling bearing cage (24) a second annular bead (30) is formed that projects axially towards the other side and forms a means of radial centring for an adjacent rolling or sliding axial bearing (32).

## Revendications

1. Roue libre à rouleaux ou à corps de serrage comprenant un palier de roulement latéral supplémentaire et comprenant des corps de serrage (21) et des corps de roulement (23), respectivement, qui sont disposés entre une couronne intérieure (15) et une couronne extérieure (16) et qui sont guidés dans des cages séparées (22 et 24), cependant que les couronnes sont pourvues de voies de roulement (17, 19 et 20) adaptées aux corps de serrage et aux corps de roulement, respectivement, que la largeur des couronnes dépasse la longueur des corps de serrage, que les cages séparées (22 et 24) portent l'une sur l'autre, et que l'une au moins (22) des cages est introduite élastiquement et fixée axialement dans une rainure annulaire (28) qui est ménagée dans l'une des couronnes par l'intermédiaire d'un organe de blocage (27),
caractérisée par le fait que :
- une partie en forme de bride (26) qui s'étend dans le sens radial est formée sur la cage de roue libre (22) au voisinage du palier à roulement, et, par l'intermédiaire de parties en saillie radiales (27), elle pénètre élastiquement dans une rainure annulaire (28) ménagée dans la couronne extérieure (16), cependant que la partie en forme de bride forme l'organe de blocage par ses parties en saillie radiales, et :
- une bride de guidage radiale (31) qui est formée sur la cage à corps de roulement (24) au voisinage de la roue libre est reçue entre l'un des côtés de la rainure annulaire (28) et la partie en forme de bride voisine (26) en étant ainsi fixée axialement.

2. Roue libre à rouleaux ou à corps de serrage comprenant un palier de roulement latéral supplémentaire selon la revendication 1, caractérisée par le fait que :
- l'un des côtés de la rainure annulaire (28) se prolonge par un prolongement annulaire (18) sur la couronne extérieure (16), et :
- la bride de guidage radiale (31) de la cage à corps de roulement (24) est reçue et fixée axialement entre le prolongement annulaire (18) et la partie en forme de bride voisine (26).

3. Roue libre à rouleaux ou à corps de serrage comprenant un palier de roulement latéral supplémentaire selon la revendication 1, caractérisée par le fait que :
- un épaulement en saillie dans le sens axial (25) est formé sur la cage de roue libre (22) au voisinage du palier à roulement,
- au moins un bourrelet annulaire en saillie dans le sens axial (29) est formé sur la cage à corps de roulement (24) au voisinage de la cage de roue libre (22) en se prolongeant par la bride de guidage radiale (31), et :
- l'épaulement en saillie dans le sens axial (25) de la cage de roue libre (22) centre la cage à corps de roulement (24) dans le sens radial par l'intermédiaire du bourrelet annulaire (29) de cette dernière.

4. Roue libre à rouleaux ou à corps de serrage comprenant un palier de roulement latéral supplémentaire selon la revendication 3, caractérisée par le fait que :
- un deuxième bourrelet annulaire (30) en saillie dans le sens axial vers l'autre côté est formé sur la cage à corps de roulement (24), et il forme un centrage dans le sens radial qui est destiné à un palier de butée voisin à roulement ou à glissement (32).
